# EUROPEAN PATENT SPECIFICATION

(11) **EP 2 981 588 B1**
(45) Date of publication and mention of the grant of the patent: **09.05.2018**
(21) Application number: 14724882.7
(22) Date of filing: 25.03.2014
(51) Int. Cl.: C09K 8/52

(54) **FILTERCAKE REMOVAL USING EXOTHERMIC IN-SITU NITROGEN-PRODUCING REACTANTS**
FILTERKUCHENENTFERNUNG MITHILFE EXOTHERMER IN-SITU-STICKSTOFFPRODUZIERENDER REAKTANTEN
ÉLIMINATION DE GÂTEAU DE FILTRATION À L'AIDE DE RÉACTIFS PRODUCTEURS D'AZOTE IN-SITU

(30) Priority: 01.04.2013 US 201361807186 P
(43) Date of publication of application: 10.02.2016
(73) Proprietor: Saudi Arabian Oil Company, Dhahran 31311 (SA)
(72) Inventor: AL-TAQ, Ali, A., Dhahran 31311 (SA); HAJI, Habeeb, H., Dhahran 31311 (SA); SALEEM, Jaffar, Abdulla, SAYHAT 32437-2874 (SA); AL-NAKHLI, Ayman, R., Dhahran 31311 (SA); RAGBIR, Daune, Bevan, Dammam 31422 (SA); FRANCO, Zadson De Almeida, 49020-430 Aracaju-SE (BR)
(74) Representative: Gervasi, Gemma
(86) International application number: PCT/US2014/031661
(87) International publication number: WO 2014/165347

(56) References cited:
- EP-A2- 0 909 873
- WO-A1-2008/032067
- WO-A1-2013/078306
- US-A- 4 846 277
- US-A1- 2006 073 986

## Description

### FIELD OF THE INVENTION

This invention relates generally to a process for the removal of filtercake from oil wells producing medium to heavy oil, and also oil wells found in low draw-down pressure reservoirs. More particularly, the present invention relates to a process for a filtercake breaker system achieved by a theromochemical reaction.

### BACKGROUND OF THE INVENTION

In the drilling of oil wells, the drilling fluid is used to aid in the drilling of boreholes into the earth. The liquid drilling fluids, which are often referred to as drilling muds, are classified into three main types of muds. They are:
water-based muds, which can be either dispersed or non-dispersed;
non-aqueous muds, usually referred to as oil-based mud; and
gaseous drilling fluid which includes a wide range of gaseous materials.

The drilling fluid serves many roles, including providing a hydrostatic pressure to prevent the fluids in the formation from entering into the wellbore, keeping the drill bit cool and clean during the drilling operation, the carrying out of drill cuttings and to suspend the drill cuttings when drilling is halted during removal and re-entry of the drilling assembly. The particular drilling fluid or mud that is employed is chosen carefully for its particular function in to order avoid damage to the reservoir formation, limit corrosion and determine filtration rate and filtercake properties.

During the drilling operation, reservoir drilling fluid is circulated within the drilling equipment to cool the drill bit, reduce friction between the drill string and the sides of the borehole, and also to form a filtercake to prevent filtrate leak-off into the formation. The driving force for the formation of the filtercake is the higher pressure applied to maintain the stability of the borehole.

The filtercake that is formed serves to restrict the inflow of fluids into the wellbore during the drilling process and to set the stage for the completion of the well. Cake properties such as thickness, toughness, slickness and permeability are important because the cake that forms on permeable zone in the wellbore, can cause the pipe to stick and other drilling problems. If the filtercake damage created during the drilling process is not removed prior to or during completion of the well, reservoir productivity will be compromised.

The prior art has taught a variety of methods for filtercake removal to enhance oil production. In U.S. 6,110,875 xanthan molecules are degraded using an xanthanase enzyme complex that is stable at temperatures above 121°C, such as those temperatures that are found in some wellbores and process streams. The xanthanase enzyme complex is produced by a novel soil bacterium. The xanthanase enzyme complex may be used to remove xanthan based formation damage, such as drilling filtercakes and filtrates, or to remove xanthan based filtercakes and/or residues which are present in processing equipment. The xanthanase enzyme complex may also be used to reduce the viscosity of xanthan-containing fluids, such as hydraulic fracturing fluids, blocking gels, drilling muds, and process fluids. The xanthanase enzyme complex may also be used in conjunction with other well or process treatments, such as stimulation and cementing operations, to improve the effectiveness of these treatments.

For example, U.S. 6,818,594 proposes methods and related compositions for altering the physical and chemical properties of the substrate used in hydrocarbon exploration, such as in downhole drilling operations. In a preferred embodiment, a method is disclosed which involves formulating a fluid tailored to the specific drilling conditions that contain one or more inactivated enzymes. Preferably, the enzyme is an activated by encapsulation and pH responsive material. After the fluid has been introduced into the well bore, one or more triggering signals, such as a change in pH, is applied to the fluid that will activate or reactivate the inactivated enzyme, preferably by causing it to be released from the encapsulation material. The reactivated enzyme is capable of selectively acting upon a substrate located downhole to bring about the desired change in the chemical or physical properties of the substrate.

U.S. 7,712,536 discloses a treatment fluid and a method for cleaning borehole filtercake using the treatment fluid, wherein the filtercake contains reservoir drilling fluid solids. The method consists of pumping the treatment fluid downhole in contact with the filtercake to be removed to establish a differential pressure between the treatment fluid and the formation adjacent the filtercake, and evenly propagating treatment of the filtercake during the differential pressure period so as to delay the breakthrough by the treatment fluid for a period of from 1 to 12 hours. The treatment fluid comprises a fluoride source containing a 1.2 to 5 molar fluoride concentration, and another acid or combination of acids to provide a pH between 1.8 and 5.

In U.S. 7,855,168 a method and composition for removing filtercake is disclosed. A multifunctional fluid is disclosed that addresses a new concept in the removal of filtercake. A composition is disclosed which comprises a carrier fluid, a surfactant, a fluorine source and an organic stabilizer which is able to minimize the precipitation of fluorine.

Another example of treating the filtercakes is found in U.S. 7,709,421 which discloses a single phase microemulsion to improve the removal of filter cakes formed during drilling with oil-based muds. The single phase microemulsion removes oil and solids from the deposited filter cake. Optionally, an acid capable of solubilizing the filter cake bridging particles may also be used with the microemulsion. In one embodiment the acid may be a polyamino carboxylic acid. Skin damage removal from internal and external filter cake deposition can be reduced. In another embodiment, the single phase microemulsion may contain a filtration control additive for delaying the filter cake removal, its destruction or its conversion.

US2006073986 describes a method of removing filter cake particles from a hydrocarbon reservoir wellbore comprising injecting ammonium chloride and acetic acid into the wellbore containing the filtercake.

US 4846277 discloses a continuous process of hydraulic fracturing of a well with in situ nitrogen foam generation employing ammonium chloride, sodium nitrate and acetic acid.

EP 0909873 discloses a process for the thermo-hydraulic control of gas hydrates under conditions of gas hydrate formation within a petroleum well by use of a Nitrogen Generation System/Solution, which process comprises the use of ammonium chloride, sodium nitrate and acetic acid.

WO2008/032067 discloses a method for increasing temperature of section of conduit used for production or transmission of hydrocarbon e.g. crude oil, involving introducing into the conduit a treatment fluid comprising ammonium chloride, sodium nitrate and acetic acid.

### SUMMARY OF THE INVENTION

The invention provides a method and a composition for removing filtercake from wells producing heavy to medium oil utilizing a thermochemical reaction mechanism. An exothermic chemical reaction is initiated downhole, according to claim 1, when two (2) added nitrogen-containing water-soluble salts are contacted with an acid to liberate nitrogen gas and heat.

The placement of the reactants includes injecting one nitrogen salt with the acid through coiled tubing, while injecting the second salt by itself through the production tubing. Upon mixing downhole in the target zone containing the filtercake, the reaction results in the generation of heat and nitrogen gas which effectively removes the filtercake from the formation in the wellbore.

The heat generated reduces the viscosity of the oil, thereby enhancing its mobility and the nitrogen gas generated reduces the hydrostatic pressure of the oil column. The generated heat and the nitrogen will also improve dissolution of the filtercake by the acid. Both actions result in an improved clean-up of the wellbore. This effectiveness of the treatment will be more pronounced with heavy oil and also in low draw-down reservoirs. This method also has a positive impact on oil well productivity.

### BRIEF DESCRIPTION OF THE DRAWINGS

Fig. 1 depicts the apparatus employed in the practice of the process of the present invention;
Fig. 2 is a typical filtration curve associated with filtrate invasion and depictions of the filtercake formation;
Figs. 2A and 2B are, respectively, schematic illustrations representative of the filtercake before and after treatment in accordance with the process of the present invention;
Figs. 3A, 3B and 3C, 3D are, respectively, illustrations representative of photographs of a laboratory filter element coated with a filtercake before and after treatment in accordance with the invention;
Fig. 4 is a temperature profile of the process of the present invention in the High Pressure/High Temperature Filter Press; and
Fig. 5 is a pressure profile of the process of the present invention in the High Pressure/High Temperature Filter Press.

### DETAILED DESCRIPTION OF THE INVENTION

The invention provides a method and composition to remove filtercake damage from wells producing heavy to medium oil. The method provides the optimal conditions for filtercake removal treatments. The system contains two nitrogen containing salts in addition to an organic acid which functions to dissolve the carbonate material present in the filtercake.

The reaction mechanism of the two nitrogen salts in the presence of the acid is set forth in the following equation:

NH₄Cl (1) + NaNO₂(1) + (H⁺)→ N₂(gas) + NaCl + 2H₂O ΔH = 75 kcal/mole (1)

The process of the invention thus provides for the simultaneous dissolution of the filtercake and the generation of heat and nitrogen gas. The temperature of the reaction can be from about 80°C to about 150°C, with a temperature of 100°C to about 120°C being preferred.

Unlike conventional clean-up fluids, the method of the present invention has the following advantages:
a. The treatment is environmentally friendly. The reactants are water-soluble nitrogen-containing salts and the reaction products are heat, N₂ and water. The preferred nitrogen-containing salts are ammonium chloride and sodium nitrite.
b. The generated heat serves to reduce the viscosity of the oil, thus enhancing oil mobility and the nitrogen gas generated reduces the effective hydrostatic pressure of the oil column. Both effects improve reservoir clean-up, especially with heavy oil and low draw-down pressure wells.
c. Both the generated heat and nitrogen gas help to overcome required draw-down to initiate flow into the well; this is especially helpful for low draw-down pressure wells. There is no need for nitrogen lift.
d. The generated heat promotes the reaction of the organic acid with the carbonate material that is present in the filtercake and the generated gas produces agitation that enhances the acid filtercake interaction and removal of filtercake from the wellbore face.
e. The process can also include the introduction of one or more water-based emulsion breakers, viscosity reducers and wetting surfactants.
f. The process is effective with weak organic acids.

The present invention also aids in solving several problems in the removal of filtercake damage from wells producing heavy to medium oil, including the following:
g. poor clean-up of filtercake in wells with low draw-down pressure;
h. poor clean-up of filtercake in wells with heavy oils; and
i. poor clean-up of filtercake damage in deep wells which typically have high hydrostatic pressure due to the column of oil.

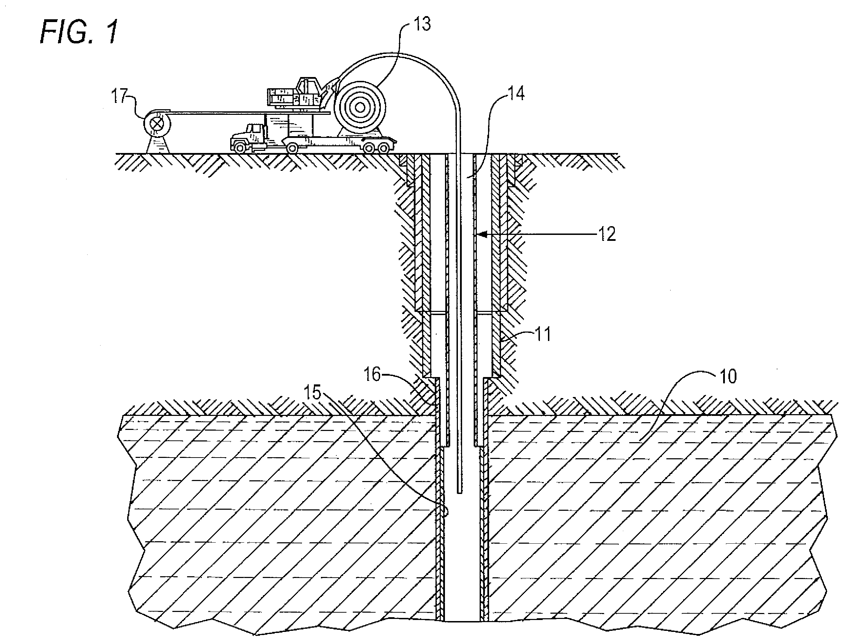

Turning to Fig. 1 which is a schematic representation of the method of the present invention, wherein an oil bearing zone 10 is depicted having a well 11 extending into the zone. Production tubing 12 and a coiled tubing 13 extend down into a wellbore 14 which extends into the oil bearing zone 10.

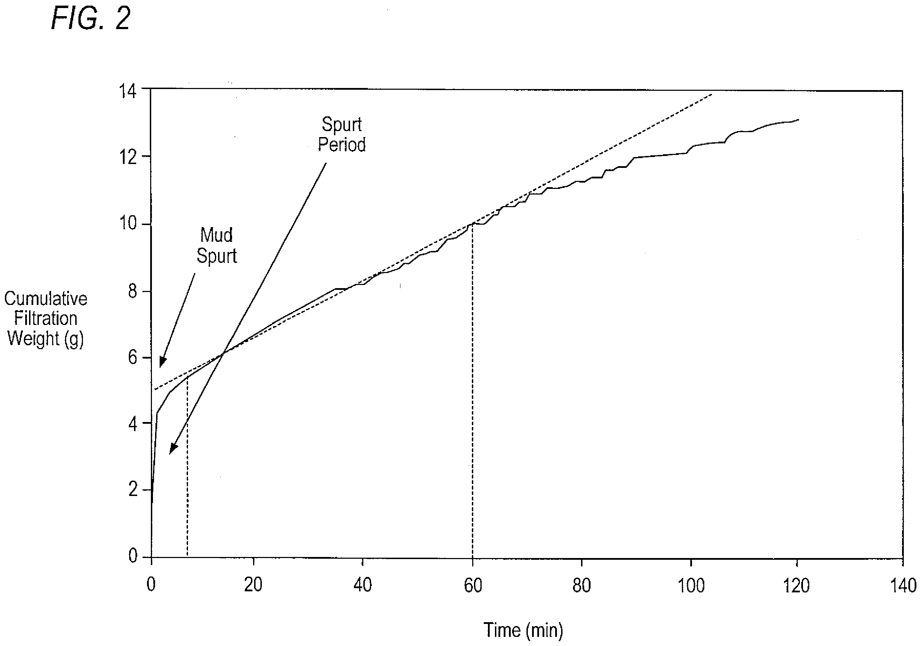

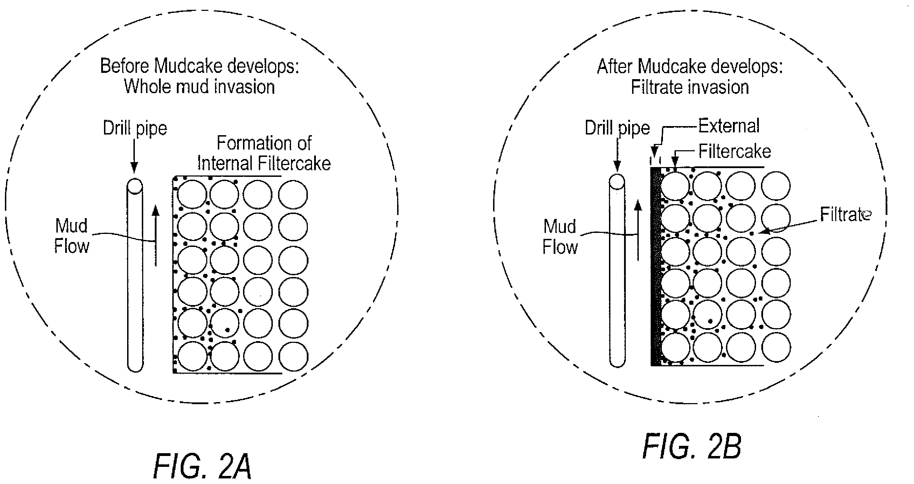

During the drilling operation, a filter cake 15 is formed at the bottom of well casing 16 where the filtercake 15 meets the oil bearing reservoir 10. Shown in the illustrations of Figs. 2A and 2B is the build-up of internal and, then later, the external filtercake which must be removed to improve the flow of hydrocarbons from the reservoir rock.

Sodium nitrite and 15 vol. % acetic acid are injected through the production tubing 12, while ammonium chloride is injected via a pump 17 through the coiled tubing 13. The rate of injection of the sodium nitrite + 15% vol. acetic acid is at about twice the rate of the ammonium chloride injection. While 15% vol. acetic acid is preferred 10 vol % to 12 vol % can be used to advantage and the acid employed can be selected from the group consisting of formic acid, propionic acid, lactic acid and benzoic acid.

Upon mixing downhole, both heat and nitrogen gas are generated which causes the acid to dissolve the filtercake.

### Example 1

In order to assess the efficacy of the method of the present invention on a laboratory scale, a High Pressure (HP)/High Temperature (HT) Fluid Loss Test was conducted. The conditions and results are set forth below:

### High Pressure/High Temperature Fluid Loss Test

A standard HP/HT filter press was used to perform tests under static conditions. Several HP/HT fluid loss tests were conducted to build-up the filter cake under static conditions using lab mud samples. The generated filtercake was then treated in accordance with the process of the present invention, Nitrogen/Heat Generation System (N/HGS), along with other additives. The test procedure employed is described below:
1. Saturate the (10 µm) disc in (44 g of NaCl + 336.7 ml H₂O) NaCl completion brine.
2. Load the disc in the fluid loss cell.
3. Fill the cell with 350 ml filtered brine solution.
4. Place the cell in heating jacket and allow 20 minutes to reach 71°C.
5. Pressurize the cell to 0.689 bar; open lower valve and record time for 300 ml effluent to pass through disc. Record initial flow rate in production direction.
6. Remove excess fluid and turn the ceramic disc over.
7. Repeat steps 3 through 5. Record initial flow rate in injection direction.
8. Bleed pressure, pour off excess brine and fill cell with 300 ml of drill-in fluid (DIF).
9. Pressurize cell to overbalance pressure (13.789 bar) and allow 20 minutes to reach test temperature of 71 °C.
10. Begin leak-off test and record filtrate volume at 1, 4, 9, 16, 25, 36 and 180 minutes.
11. Bleed pressure and siphon out majority of remaining DIF without disturbing the filter cake.
12. Carefully remove the disc and take photograph. Replace the disc in cell.
13. Add clean-up treatment to cell and soak it for 2 hours.
14. Bleed pressure and siphon out majority of remaining treatment fluid.
15. Rinse cell with a filtered brine solution.
16. Remove the disc and take photograph.
17. Place cell in heating jacket and allow 20 minutes to come to test temperate, 71°C.
18. Pressurize cell to 0.689 bar and record time to flow 300 ml in the production direction.
19. Calculate clean-up efficiency by dividing the time required to obtain 300 ml of the filtrate after addition of DIF by that obtained before addition of the DIF.

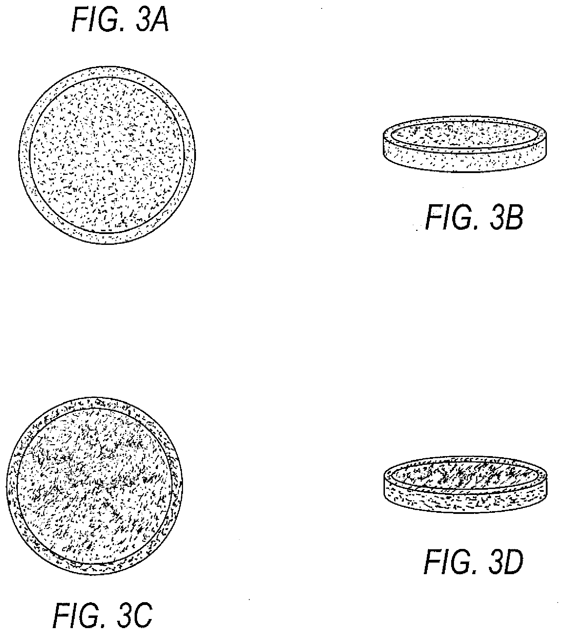

Fig. 3 provides support that the process of the present invention (N/HGS) is very effective as a filtercake breaker system and the obtained returned permeability of 81% is well justified. As shown in Fig. 3, the process of the present invention, which is a nitrogen and heat generating system (N/HGS), was able to deteriorate and destroy the filtercake. Also, the inherent properties of N/HGS will help to remove different types of mud damage as shown in the series of illustrations of Figs. 3A - 3D, discussed in more detail below.

Referring now to the representative illustrations of 3A - 3D that are based on before and after photographs, Figs. 3A and 3B show a circular laboratory filter disc test element that contains a filtercake on the upper surface of uniform thickness and consistency before being subjected to the treatment in accordance with the process of the invention. Following exposure to the treatment, the filtercake of Figs. 3C, 3D has fissures and has been loosened and removed from the filter medium in some areas.

### Example 2

### Thermodynamics Determination of N/HGS:

The test procedure used to determine N/HGS thermodynamic was as follows:
1. Place 64 ml (30 ml of NaNO₂ and 30 ml of NH₄Cl) in a 1000 ml beaker.
2. Add 36 ml SGN Reagent B to the beaker.
3. Stir gently using a magnetic stirrer for one (1) minute
4. Record temperature
5. Add 0.5 ml of acetic acid to the beaker to start the reaction
6. Record the temperature at 30 second intervals until reaction is completed
7. Repeat experiment to eliminate errors.

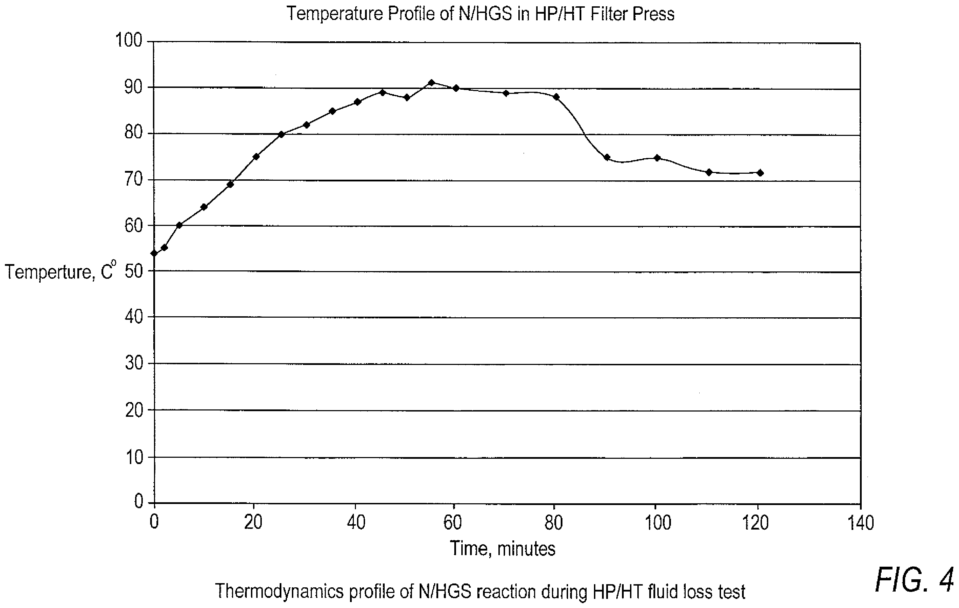

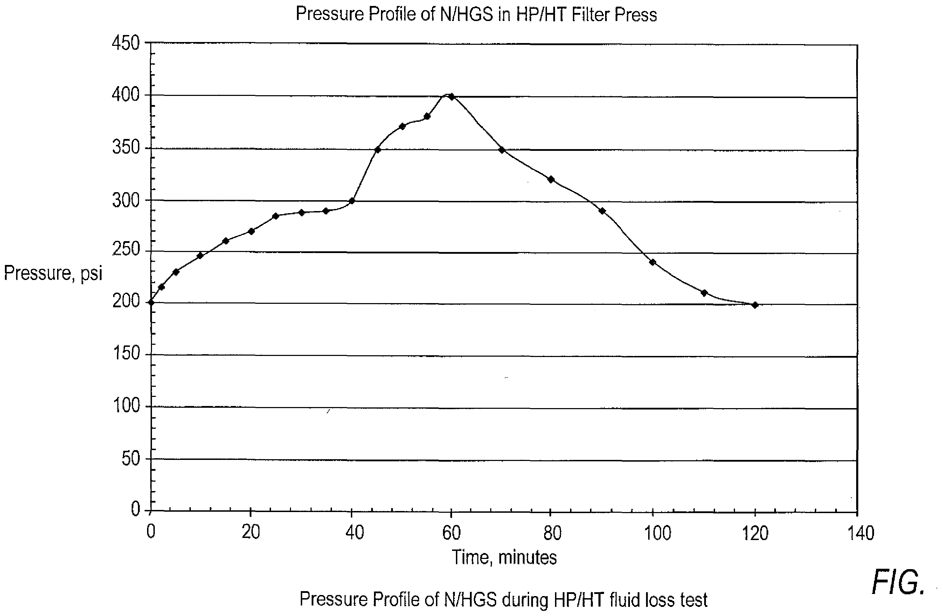

The same testing procedure that was used in Example 1 with the HP/HT filter press was used to generate the temperature and pressure profiles shown in Figs. 4 and 5. The results obtained show that significant heat generation and nitrogen production which was observed as pressure increased is associated with the exothermic reaction of the N/HGS components.

### Example 3

This example is representative of the process of the present invention.

Employing the apparatus depicted in Fig. 1, Pill A, whose composition is set forth in Table 1 below, is injected into the coiled tubing and Pill B, whose composition is identified in Table 1 below, is injected into the production tubing. Pill A is injected at twice the rate of Pill B. The term "pill" as used here means batch or mixture.

**Table 1**

| **General formulation of N/HGS** | | |
|---|---|---|
| **Component** | **Composition** | **Concentration** |
| **Pill A** | NaNO₂+ 15 vol% Acetic Acid | 66.67 vol% |
| **Pill B** | NH₄Cl | 33.33 vol% |

### Example 4

Employing the apparatus depicted in Fig. 1, Pill A and Pill B, consisting of the ingredients in Table 2 below were injected through the production tubing, 12, while Pill C which consists of the ingredients recited in Table 2, was injected through the coiled tubing 13.

**Table 2**

| **Pill Name** | **Composition** | | | | | **Formulation** |
|---|---|---|---|---|---|---|
| **Pill A** | 40.1 vol% NaNO₂ | 19.7 vol% Acetic Acid | | 20.1 vol% EC-103 | 20.1vol% EC-106 | **51 vol% Pill A** |
| **Pill B** | 100% Diesel | | | | | **0.6 Vol% Pill B** |
| **Pill C** | 50 vol% NaNO₂ | | 50 vol% NH₄Cl | | | **48.4 vol% Pill C** |

As can be seen below in Table 3, the field results obtained from well C, treated in accordance with the method of the present invention, yielded a normalized oil rate of 1, while well A treated by acid precursor and well B treated by enzyme and in-situ acid generated results which are significantly lower in normalized oil rates.

**Table 3**

| **Well** | **Treatment System** | **Normalized Oil Rate** |
|---|---|---|
| A | 1 | 0.57 |
| B | 2 | 0.78 |
| C | N/HGS | 1 |

Well C shows the highest oil rate following N/HGS treatment. If it is assumed that well C has a flow rate of 1,000 bbls/day, then well B will have a flow rate of 780 bbls/day and well A will have a flow rate of 570 bbls/day.

The invention has been described with reference to specific embodiments thereof, and provides a method and composition for the removal of filtercake particles from a wellbore in a hydrocarbon reservoir.

## Claims

1. A method of removing filtercake particles formed in a wellbore extending into a hydrocarbon reservoir, which comprises initiating an exothermic chemical reaction downhole when NH₄Cl and NaNO₂ are contacted with an acid to liberate nitrogen gas and heat.

2. The method of claim 1, wherein the acid is acetic acid.

3. The method of claim 2, wherein the NaNO₂ and the acetic acid are injected separately from the NH₄Cl.

4. The method of claim 2, wherein the NaNO₂ and the acetic acid are injected through the wellbore's connective tubing and the NH₄Cl is injected through the wellbore's production tubing.

5. The method of claim 2, wherein the NH₄Cl is injected at about two times the rate that the NaNO₂ and acetic acid are injected.

6. The method of claim 2, wherein the heat generated is about 75 kcal/mole of NH₄Cl or NaNO₂.

## Patentansprüche

1. Verfahren zur Entfernung von Filterkuchenpartikeln, die in einem Bohrloch gebildet werden, das sich in ein Kohlenwasserstoff-Reservoir erstreckt, wobei das Verfahren eine exotherme chemische Reaktion lochabwärts auslöst, wenn NH₄Cl und NaNO₂ mit einer Säure zusammengebracht werden, um Stickstoffgas und Wärme freizusetzen.

2. Verfahren gemäß Anspruch 1, wobei die Säure Essigsäure ist.

3. Verfahren gemäß Anspruch 2, wobei NaNO₂ und die Essigsäure getrennt von NH₄Cl injiziert werden.

4. Verfahren gemäß Anspruch 2, wobei NaNO₂ und Essigsäure durch die Verbindungsleitung des Bohrlochs und NH₄Cl durch die Förderleitung des Bohrlochs injiziert wird.

5. Verfahren gemäß Anspruch 2, wobei NH₄Cl etwa doppelt so oft injiziert wird wie NaNO₂ und Essigsäure injiziert werden.

6. Verfahren gemäß Anspruch 2, wobei die erzeugte Wärme etwa 75 kcal / Mol NH₄Cl oder NaNO₂ beträgt.

## Revendications

1. Procédé d'élimination de particules de gâteau de filtration formées dans un puits de forage se prolongeant dans un réservoir d'hydrocarbure, qui comprend l'initiation d'une réaction chimique exothermique en fond de puits quand du NH₄Cl et du NaNO₂ sont mis en contact avec un acide pour libérer de l'azote gazeux et de la chaleur.

2. Procédé selon la revendication 1, dans lequel l'acide est l'acide acétique.

3. Procédé selon la revendication 2, dans lequel le NaNO₂ et l'acide acétique sont injectés séparément du NH₄Cl.

4. Procédé selon la revendication 2, dans lequel le NaNO₂ et l'acide acétique sont injectés à travers la colonne de connexion du puits de forage et le NH₄Cl est injecté à travers la colonne de production du puits de forage.

5. Procédé selon la revendication 2, dans lequel le NH₄Cl est injecté à environ deux fois le débit auquel le NaNO₂ et l'acide acétique sont injectés.

6. Procédé selon la revendication 2, dans lequel la chaleur générée est environ de 75 kcal/mole de NH₄Cl ou de NaNO₂.
